Europäisches Patentamt

European Patent Office

Office européen des brevets

(11) Publication number: **0 180 446**
**B1**

## EUROPEAN PATENT SPECIFICATION

(45) Date of publication of patent specification: **20.12.89**

(21) Application number: **85307788.1**

(22) Date of filing: **28.10.85**

(51) Int. Cl.⁴: **H 04 N 9/64,** H 04 N 5/14

(54) **Methods of detecting motion of television images.**

(30) Priority: **27.10.84 JP 226604/84**

(43) Date of publication of application:
**07.05.86 Bulletin 86/19**

(45) Publication of the grant of the patent:
**20.12.89 Bulletin 89/51**

(84) Designated Contracting States:
**AT DE FR GB NL**

(56) References cited:
**GB-A-2 003 001**
**US-A-3 890 462**
**US-A-4 242 704**

(73) Proprietor: **SONY CORPORATION**
**7-35 Kitashinagawa 6-Chome Shinagawa-ku**
**Tokyo 141 (JP)**

(72) Inventor: **Kondo, Tetsujiro c/o Patents Division**
**Sony Corporation 6-7-35 Kitashinagawa**
**Shinagawa-ku Tokyo 141 (JP)**

(74) Representative: **Thomas, Christopher Hugo**
**et al**
**D Young & Co 10 Staple Inn**
**London WC1V 7RD (GB)**

Courier Press, Leamington Spa, England.

## Description

This invention relates to methods of detecting motion of television images.

The detection of large-scale motion of a television image caused by panning or tilting of the television camera is particularly important in cases where the output image data of the television camera is digitized, compressed and transmitted or recorded, and on reception or reproduction is expanded so as to reconstruct the original signal for display. This is because image data compression can severely degrade the image quality if motion occurs between frames. However, if the motion between frames can be accurately measured, it is possible to compensate for this motion, prior to display so maintaining the picture quality.

A block matching method has been proposed for detecting a movement vector of a television image. In the block matching method, each field in the previous frame is divided into a large number of small blocks. The movement vector is a measure of the direction and speed of motion of an entire block. A data comparison is made between each block in the previous frame and all blocks within a search area, which is a region surrounding the block of interest, in the current frame. In this way, the block in the current frame having the best data correlation with the original block can be detected, and hence the movement vector determined.

In one proposed method of determining the correlation, the magnitudes of the differences from frame to frame of the pixel data which correspond to each other in two blocks to be compared are obtained, and these magnitudes are summed for all the pixels in the block. The block in the search area having the minimum pixel difference summation value is then taken to be the new position of the original block. Thus, if the new position of each original block is known, the movement vector of each block in the previous frame can be determined. This is a so-called full-number inspection method, in that the pixel difference summation value for all possible blocks within the search area are compared in the course of the search for a minimum value. This method has the substantial disadvantage that the comparison time required for motion detection is large, as it takes a very long time to compute the movement vectors for all the blocks within the television image. UK patent specification GB—A—2,003,001 discloses a method in which instead of finding the difference between every pair of corresponding picture elements, the difference between, for example, every sixteenth pair of corresponding elements is found. This is said to be more sensitive to the movement of small objects, or large-area high-detail objects.

Another problem arises in the particular case of a block matching method where each field is treated as being a single block. The field is then manipulated in an identical fashion to the previously described block matching technique, but in such large-scale motion detection, it is desirable to detect the slowest moving object in the image, simply because the human eye is most sensitive to the detail in slow moving objects. Using the full-number inspection method, the smallest pixel difference summation value is selected for determining the movement vector. This value corresponds to the net motion in the field. However, in large-scale motion detection, the local minimum value of the pixel difference summation value nearest to zero motion, that is, the slowest significant motion in the field, should be detected. Thus, the full-number inspection method fails to determine the appropriate movement vector, resulting in a deterioration in the quality of the reproduction of the slow moving object.

For example, where mountains form the background in an image, and an aircraft forming the subject of interest or objective image is flying in front of these mountains, the television camera may be panned to follow the aircraft in such a manner that the aircraft remains located at the centre of the viewfinder. When the motion of the television image is detected using such large-scale motion detection, there will be a local minimum in the pixel difference summation value, corresponding to the motion of the aircraft. There is also a local minimum in the pixel difference summation value corresponding to the relative motion of the background, that is the mountains. If the full-number inspection method is used, then the movement vector corresponding to the local minimum of greatest magnitude will be selected. However, this is not what is required, as the local minimum value closest to zero motion, that is corresponding to the slowest moving object, should be selected. If the movement vector corresponding to the background is selected, the picture quality of the aircraft will be deteriorated by the motion correction. This is because when the motion correction is performed, the motion of the image of the background is detected, and then the coordinates of the aircraft will be shifted by the distance corresponding to the motion of the image of the background, causing the image of the aircraft to become blurred.

According to the present invention there is provided a method of detecting motion of a television image, characterized by:

obtaining frame difference data representative of the magnitudes of the differences between the pixel data in two successive frames of the television image for a representative pixel in each of a plurality of blocks into which the television image is divided, the frame difference data for each block being calculated and summed for respective points im a block matching table to obtain a frame difference summation table; and

deriving a movement vector representing the speed and direction of said motiom from a local minimum summed frame difference value in the frame difference summation table;

the movement vector being defined by a line from an origin in the frame difference summation table representing zero motion to the coordinates of said local minimum value, and said local minimum value being found by using the values stored in said frame difference summation table to compute gradients in four direction in said television image.

In methods according to the present invention time and hardware are saved by finding a block minimum value within a local search area. Thus the magnitude of the frame difference summation is obtained for each position within the search area. In each position, the magnitude of the immediately preceding frame difference is recorded in a table, called a block matching table. There is then sequentially obtained the maximum gradient from among four directions, upwards, downwards, to the right and to the left from the origin of the block, using the data from the block matching table. In this way the local minimum value can be obtained directly. A technique for verifying the location of the local minimum value is also disclosed.

The block matching table is stored in a memory, and the detection and verification of the local minimum value are performed using the frame difference summation data in the block matching table. The detection of the local minimum value is started from the origin of the block matching table, that is the value of the frame difference summation computed with no shifting of the frame. (If this value happened to be a local minimum, then the movement vector would be zero.) The values are then compared sequentially from the origin emanating outward in the search for a local minimum. In this way the correct local minimum, corresponding to the smallest movement vector can be found without the need to compare all the values in the block matching table.

With methods according to the present invention it is possible to detect the motion of an objective image accurately, so that a digitized, compressed television image can subsequently be reconstructed without undue degradation of the objective image. Moreover, it is possible to reduce the processing time and the hardware required, as compared with full-number inspection methods.

The invention will now be described by way of example with reference to the accompanying drawings, in which:

Figure 1 is a diagram for explaining the division of an image frame;

Figure 2 is a block diagram of an example of apparatus for performing a method according to the present invention;

Figures 3 and 4 are diagrams for explaining a block matching table;

Figure 5 is a flow chart for explaining the detection and verification of a local minimum value;

Figures 6 and 7 are diagrams for explaining the detection and verification of the local minimum value;

Figure 8 is a flow chart showing a procedure for detecting the local minimum value; and

Figure 9 is a flow chart showing a procedure for verifying the local minimum value.

The method according to the present invention now to be described is basically a block matching method, and is applied to the detection of motion in a television image and hence movement of a television camera, which may be caused by panning or tilting of the television camera. In this method, in order to reduce the number of calculations required, relative to the above full-number inspection method, the difference between the pixel data at the centre, which is taken to be a representative pixel, of each of a plurality of blocks, into which each frame is notionally divided, is taken between the previous frame and the current frame. The differences so obtained are then summed for the whole frame, thereby detecting the motion of the image.

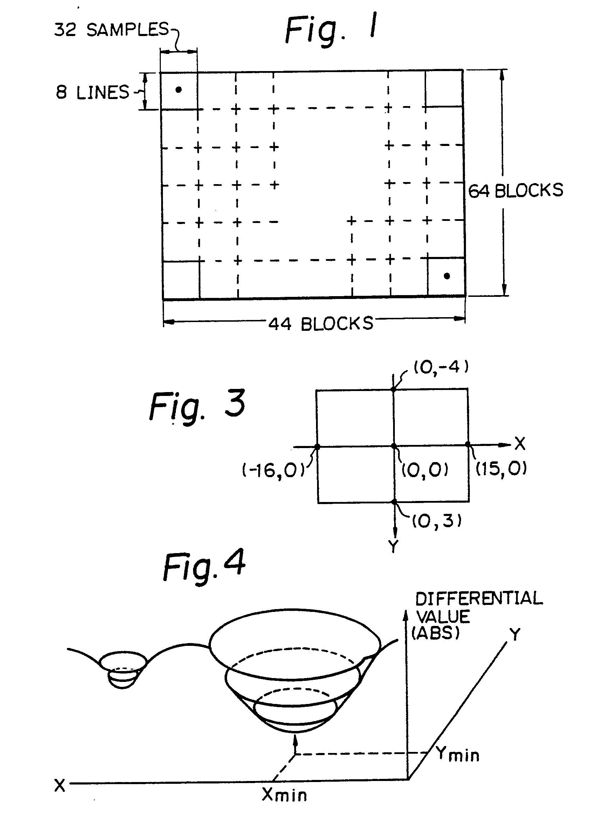

Figure 1 shows an example of the notional division of a frame into blocks. The method is assumed to be applied to a high definition television system, and the frame is divided into forty-four blocks in the horizontal direction and sixty-four blocks in the vertical direction. Thus for a 525-line television system having 512 active lines, each block in the vertical direction comprises eight horizontal lines. Moreover, in this particular system, the system sample rate is such that each block comprises thirty-two samples in the horizontal direction. Thus 256 pixels are included in each block, but the above calculations needs to be done for only one pixel in each block, instead of for $256 \times 8 \times 32$.

In the apparatus shown in Figure 2, a representative pixel memory 1 is provided to store the data of the representative pixel of each block in one frame of the input image data. In a subtracting circuit 2, the difference between the data of the representative pixel in the previous frame and of the representative pixel in the corresponding block in the current frame is calculated. An output of the subtracting circuit 2 is converted to a magnitude or absolute value by a converter 3, and is supplied to an adding circuit 4. The output of the adding circuit 4 is alternately written into a first block matching table memory 5 and a second block matching table memory 6 for every field.

The memories 5 and 6 are connected to a data bus 8 of a central processing unit (CPU) 7. Outputs of the memories 5 and 6 are connected to a selector 9 allowing for recursive summation. A data value of all "0" is supplied as another input to the selector 9. This zero value is selected by the selector 9 and supplied to the adding circuit 4 when the data for the first representative pixel in a new field is being processed. The memories 5 and 6 store the data of the representative pixel of one block. The magnitude of the differential data read out is supplied to the adding circuit 4, and the output of the adding circuit 4 is written back into the original address, so that the summation values, which form a frame difference summation table, of the differential data in one field are stored in each of the memories 5 and 6. The CPU 7 detects the local minimum value and verifies this detected local minimum value to see if it is correct or not, by reference to the frame difference summation tables stored in the memories 5 and 6. Because of the high speed of this method, the memories 5 and 6 are used by the CPU 7 and the adding circuit 4 simultaneously. To avoid errors caused by data conflicts between data access by the CPU 7 and the adding circuit 4, the operation is such that the CPU 7 accesses the memory 5 when the adding circuit 4 accesses the memory 6, and vice versa.

It takes a time period corresponding to one frame of the television signal for the representative pixel memory 1, the subtracting circuit 2 and the converter 3 to sum the magnitudes of the frame differences detected for each block in a whole frame. Therefore, the input image data is written into a frame memory 10, and the movement vector obtained as described below is supplied from the CPU 7 to an adding circuit 11. The adding circuit 11 adds a signal corresponding to the movement vector to the image data and the resulting signal is then processed as required and transmitted. After reception, the motion correction to shift the coordinate axis is performed in dependence on the movement vector.

As shown in Figure 3, the frame difference summation tables which are stored in the memories 5 and 6 respectively, are specified by the X—Y coordinates, with the origin (0,0) taken as a centre. The X—Y coordinates refer to the amount by which the original frame is shifted when the differential summation is computed. The X—Y coordinates include the values from $-16$ to 15 along the X axis, and the values from $-4$ to 3 along the Y axis, corresponding to the number of samples in the horizontal line of a block and the number of horizontal lines in a block, respectively. A frame difference summation table such as graphically illustrated in Figure 4 is formed in each of the memories 5 and 6, where ordinates indicate the magnitudes of the frame difference summations. The point at the minimum distance from the plane defined by the X and Y axes is the required local minimum value. The coordinates Xmin, Ymin of the local minimum value in this frame difference summation table are detected by the CPU 7. Then the vector connecting the origin to the coordinates Xmin, Ymin, represents the movement vector, and again is determined by the CPU 7.

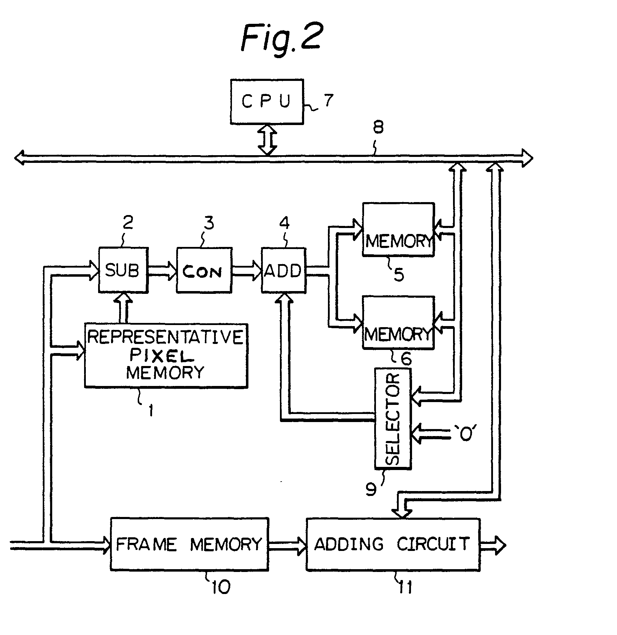

The detection and verification of the movement vector by the CPU 7 using the data in the frame difference summation table stored in the memories 5 and 6, will now be further described with reference to Figures 5 to 9.

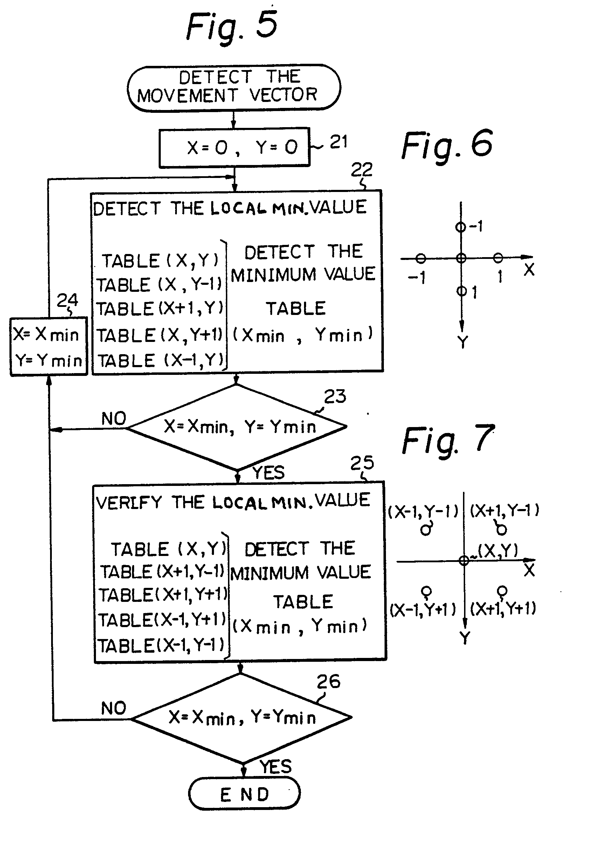

As shown in Figure 5, the motion detection is started from the origin of the block in steps 21 and 22. Figure 6 shows four frame difference summation data which are located adjacent to one another in the four directions upwards, downwards, to the left, and to the right of the origin, respectively. In this case, the local minimum value is detected by detecting the minimum value among the data. In Figure 5, the word "TABLE", indicates the data of the respective coordinates 0,0; 0,-1; 1,0; 0,1; and -1,0 in the frame difference summation table. The coordinates Xmin, Ymin of the minimum value are checked to see if they coincide with X and Y, in this case 0,0, in a step 23. If they coincide, a step 25 for verification of the local minimum value follows. If they do not coincide in the step 23, then the coordinates Xmin, Ymin of the minimum value are replaced by X and Y in a step 24, and the minimum value for the adjacent data for each of the four directions around the coordinates X,Y as centre are again detected in the step 22.

In this way, the detection of the local minimum value is started from the origin and is performed in the maximum negative gradient direction among the four directions from the origin. The location where none of the gradients for these four directions is negative is determined to be a local minimum value. If the coordinates of the minimum value location coincide with the previous coordinates in the step 23, the processing routine advances to a step 25 for verification of the local minimum value.

As shown in Figure 7, in the step 25, a computation is done to obtain the minimum value between each of the frame difference summation data for the coordinates X+1, Y-1; X+1, Y+1; X-1, Y+1; and X-1, Y-1 which are located in an oblique direction relative to the coordinates X,Y of the detected local minimum value. When the coordinates Xmin, Ymin of the detected minimum value coincide with the coordinates X,Y, it is confirmed that the local minimum value detected is correct. If they do not coincide, then the step 24 follows, and the detection of the local minimum value is repeated.

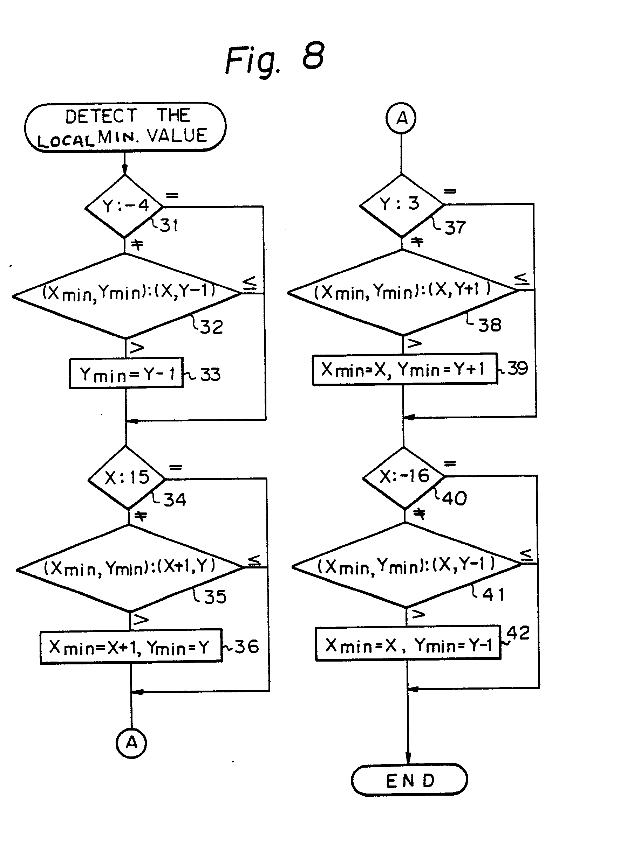

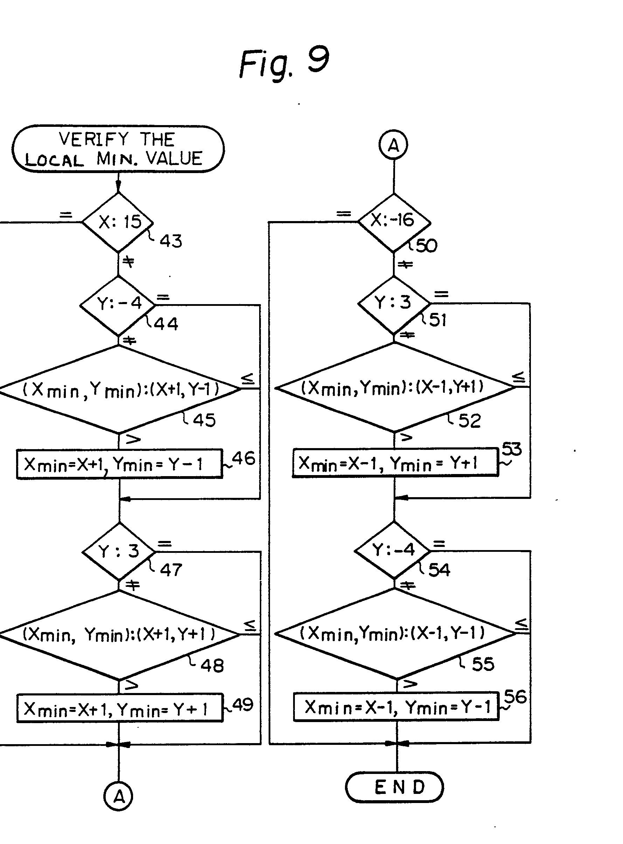

Figure 8 shows a more detailed flow chart for the step 22 for detection of the local minimum value. Figure 9 shows a more detailed flow chart for verification of the local minimum value. In Figures 8 and 9, " : " denotes a comparison of the magnitudes of the data. The indication "TABLE" representing the data for the coordinates is omitted from Figures 8 and 9.

In this example, the detection of the local minimum value is performed by first comparing data for a pixel in the upward direction, then a pixel in the direction to the right, then a pixel in the downward direction, and finally a pixel in the direction to the left. In a first step 31 of the detection of the local minimum value, a check is made to see if the coordinate Y coincides with $-4$ or not. When they coincide, this means that the data located in the upward direction does not exist, so the local minimum value detection for the upward direction is omitted, and the local minimum value detection for the direction to the right is performed. In a comparison step 32, a comparison is made between the data of the coordinates Xmin, Ymin detected as the local minimum value, and the data of the coordinates X,Y-1 located in the upward direction relative to that data.

When the magnitude of the data of the coordinates Xmin, Ymin is larger than the data of the coordinates X,Y−1, the Y coordinate of Y−1 replaces Ymin in a replacement step 33. If the data of the coordinates Xmin, Ymin are equal to or smaller than the data of the coordinates X,Y−1, the coordinate Ymin is not changed.

After completion of the comparison with the frame difference summation data in the upward direction, a comparison with the frame difference summation data in the direction to the right is then performed. In this case, firstly, a check is made to see if X equals fifteen or not in a step 34. If X is equal to fifteen, then the data which is to be compared does not exist in the direction to the right, so that a comparison step 35 in which data to the right is to be compared is omitted.

In the comparison step 35, similar to step 32, the magnitudes of the frame difference summation data detected as the minimum value so far, and the frame difference summation data in the direction to the right of that data are compared. When the data to the right is smaller than the data of the coordinates Xmin, Ymin, the coordinate Xmin is replaced by X+1 and the coordinate Ymin is replaced by Y+1 in a replacement step 36. If the data in the direction to the right is equal to or larger than the data of the coordinates Xmin, Ymin, the coordinates Xmin, Ymin are not replaced.

Moreover, in steps 37 to 39, a comparison of the magnitude with the frame difference summation data in the downward direction is made. Then, in final steps 40 to 42, a comparison of the magnitude with the frame difference summation data in the direction to the left is made. In this way, the coordinates of the first local minimum value are obtained.

Figure 9 is a more detailed flow chart for the procedure of the step 25 for verification of the local minimum value in Figure 5. In this local minimum value verification, a comparison of the magnitude is first made between the data of the coordinates X,Y in the foregoing local minimum value detection and the frame difference summation data of the coordinates X+1, Y−1 in the right upper oblique direction from that data. In this case, a check is made to see if X equals 15 or Y equals −4 or not, in steps 43 and 44. When X equals 15 and Y equals −4, this means that no data exists in the right upper oblique direction, so that a comparison step 45 and a replacement step 46 are omitted.

Subsequently, a comparison of the magnitude with the frame difference summation data in the right lower oblique direction is made. In this case, when Y equals 3, a comparison step 48 for comparison with the data in the right lower oblique direction and a replacement step 49 are omitted.

Moreover, a comparison of the magnitude with the frame difference summation data in the left lower oblique direction is then made. In this case, a check is made to see if X equals −16 or Y equals 3 or not in steps 50 and 51. When X equals −16 and Y equals 3, this means that the data for comparison does not exist in the lower left oblique direction, so a comparison step 52 and a replacement step 53 are omitted.

Finally, a comparison of the magnitude of the frame difference summation data in the left upper oblique direction is made. In this case, a check is made to see if Y equals −4 or not in a step 54. When Y equals −4, the data for comparison does not exist in the left upper oblique direction, so that a comparison step 55 and a replacement step 56 are omitted.

In this way, the detected local minimum value is verified, so preventing an erroneous local minimum value from being detected.

In the method described, it is not necessary to check all the data in the frame difference summation table, it being sufficient to perform the comparison only in the region of the straight line connecting the origin to the local minimum value. Therefore the processing time is substantially reduced, and the detected local minimum value can be verified. In addition, high speed operation is not required, so there is substantial simplification of the hardware relative to prior methods.

Moreover, when a plurality of local minimum values exist in the frame difference summation table, the appropriate one of the local minimum values can be selected quite easily. This means that large-scale motion in a television image can be detected, and deterioration of the resolution of an objective image can be avoided. Moreover, when the television camera is not moved, the influence of a moving object in the image can be eliminated by detecting the local minimum value near the origin.

## Claims

1. A method of detecting motion of a television image, characterized by:

obtaining (1, 2) frame difference data representative of the magnitudes of the differences between the pixel data in two successive frames of the television image for a representative pixel in each of a plurality of blocks into which the television image is divided, the frame difference data for each block being calculated and summed (4, 5, 6, 9) for respective points in a block matching table to obtain a frame difference summation table (5, 6); and

deriving (7) a movement vector representing the speed and direction of said motion from a local minimum summed frame difference value in the frame difference summation table (5, 6);

the movement vector being defined by a line from an origin in the frame difference summation table (5, 6) representing zero motion to the coordinates of said local minimum value, and said local minimum value being found by using the values stored in said frame difference summation table (5, 6) to compute gradients in four directions in said television image.

2. A method according to claim 1 wherein the search for said local minimum value is started at the origin.

3. A method according to claim 2 wherein said directions are upwards, downwards, to the right, and to the left.

4. A method according to claim 1, claim 2 or claim 3 wherein the frame difference summation table data are stored in a memory (5, 6).

5. A method according to any one of the preceding claims wherein said television image is divided into a rectangular array of blocks arranged horizontally and vertically, and a said representative pixel is located at the centre of each said block.

**Patentansprüche**

1. Verfahren zur Erfassung von Bewegung in einem Fernsehbild, gekennzeichnet durch

die Gewinnung (1, 2) von Vollbild-Differenzdaten, die für die Größen der Differenzen zwischen den Pixeldaten in zwei aufeinanderfolgenden Vollbildern des Fernsehsignals für ein repräsentatives Pixel in jedem von mehreren Blöcken kennzeichnend sind, in die das Fernsehbild unterteilt ist, wobei diese Vollbild-Differenzdaten für jeden Block berechnet und zur Gewinnung einer Vollbild-Differenz-Summentabelle (5, 6) für entsprechende Punkte in einer Block-Ausgleichtabelle addiert werden (4, 5, 6, 9), und

Herleitung (7) eines die Geschwindigkeit und die Richtung der Bewegung repräsentierenden Bewegungsvektors aus einem lokalen Minimalwert der addierten Vollbild-Differenz in der Vollbild-Differenz-Summentabelle (5, 6),

wobei der Bewegungsvektor durch eine Linie definiert ist, die von einem Koordinatenursprung in der Vollbild-Differenz-Summentabelle (5, 6), der Stillstand repräsentiert, zu den Koordinaten des genannten lokalen Minimalwerts verläuft, und wobei dieser lokale Minimalwert ermittelt wird, indem die in der Vollbild-Differenz-Summentabelle (5, 6) gespeicherten Werte zur Berechnung von Gradienten in vier Richtungen des Fernsehbildes verwendet werden.

2. Verfahren nach Anspruch 1, bei dem die Suche nach dem lokalen Minimalwert im Koordinatenursprung begonnen wird.

3. Verfahren nach Anspruch 2, bei dem die genannten Richtungen nach oben, unten, rechts- und links weisen.

4. Verfahren nach Anspruch 1, 2 oder 3, bei dem die Daten der Vollbild-Differenz-Summentabelle in einem Speicher (5, 6) gespeichert werden.

5. Verfahren nach einem der vorhergehenden Ansprüche, bei dem das Fernsehbild in ein rechteckiges Feld von Blöcken unterteilt wird, die horizontal und vertikal angeordnet sind, und bei dem das repräsentative Pixel im Zentrum jedes Blocks angeordnet ist.

**Revendications**

1. Procédé de détection du mouvement d'une image de télévision, caractérisé par les opérations suivantes:

on obtient (1, 2) des données de différences d'images complètes représentatives des amplitudes des différences existant entre les données d'éléments d'image de deux images complètes successives de l'image de télévision pour un élément d'image représentatif se trouvant dans chacun de plusieurs blocs en lesquels l'image de télévision a été divisée, les données de différences d'images complètes relatives à chaque bloc étant calculées et additionnées (4, 5, 6, 9) pour des points respectifs d'une table d'appariement de blocs de manière qu'on obtienne une table d'addition de différences d'images complètes (5, 6); et

on déduit (7) un vecteur mouvement représentant la vitesse et la direction dudit mouvement à partir d'une valeur minimale locale des différences additionnées des images complètes de la table d'addition de différences d'images complètes (5, 6);

où le vecteur mouvement est défini par une ligne qui part d'une origine se trouvant dans la table d'addition de différences d'images complètes (5, 6) et représentant un mouvement nul et qui va jusqu'aux coordonnées de ladite valeur minimale locale, et on trouve ladite valeur minimale locale en utilisant les valeurs emmagasinées dans ladite table d'addition de différences d'images complètes (5, 6) de manière à calculer des gradients dans quatre directions de ladite image de télévision.

2. Procédé selon la revendication 1, où la recherche de ladite valeur minimale locale commence à origine.

3. Procédé selon la revendication 2, où lesdites directions sont la direction ascendante, la direction descendante, la direction allant vers la droite, et la direction allant vers la gauche.

4. Procédé selon la revendication 1, 2 ou 3, où les données de la table d'addition de différences d'images complètes sont emmagasinées dans une mémoire (5, 6).

5. Procédé selon l'une quelconque des revendications précédentes, où ladite image de télévision est divisée en un réseau rectangulaire de blocs disposés horizontalement et verticalement, et un dit élément d'image représentatif est placé au centre de chaque dit bloc.

## Fig. 1

32 SAMPLES

8 LINES

64 BLOCKS

44 BLOCKS

## Fig. 3

(0,-4)

(-16,0)    (0,0)    (15,0)

X

(0,3)

Y

## Fig. 4

DIFFERENTIAL VALUE (ABS)

Y

X

Xmin

Ymin

# Fig.2

## Fig. 5

*Fig. 6*

*Fig. 7*

```
        ┌─────────────────────┐
        │   DETECT THE         │
        │  MOVEMENT VECTOR     │
        └─────────┬───────────┘
                  │
        ┌─────────▼───────────┐
        │   X = O ,  Y = O     │─── 21
        └─────────┬───────────┘
```

DETECT THE LOCAL MIN.VALUE — 22

| TABLE (X,Y) | DETECT THE |
|---|---|
| TABLE (X , Y-1) | MINIMUM VALUE |
| TABLE (X+1,Y) | TABLE |
| TABLE (X,Y+1) | (Xmin , Ymin) |
| TABLE (X-1,Y) | |

24
X = X min
Y = Y min

23
NO ◄─── X = Xmin, Y = Ymin

YES

VERIFY THE LOCAL MIN.VALUE — 25

| TABLE (X,Y) | DETECT THE |
|---|---|
| TABLE (X+1,Y-1) | MINIMUM VALUE |
| TABLE(X+1,Y+1) | TABLE |
| TABLE(X-1,Y+1) | (Xmin , Ymin) |
| TABLE(X-1,Y-1) | |

26
NO ◄─── X = Xmin, Y = Ymin

YES

┌─────────┐
│  E N D   │
└─────────┘

# Fig. 8

```
        ┌─────────────────────┐                              (A)
        │   DETECT  THE       │                               │
        │ LOCAL MIN. VALUE    │                               │
        └─────────────────────┘                               │
                   │                                          │
                   ▼                                          ▼
                  ╱╲          =                              ╱╲          =
                 ╱  ╲ ────────────┐                         ╱  ╲ ────────────┐
                ╱Y:-4╲            │                        ╱ Y:3 ╲           │
                ╲    ╱ ─31        │                        ╲    ╱ ─37        │
                 ╲  ╱             │                         ╲  ╱             │
                  ╲╱              │                          ╲╱              │
                   │ ≠            │                           │ ≠            │
                   ▼              │                           ▼              │
                 ╱────╲      ≤    │                        ╱─────╲      ≤    │
               ╱        ╲─────────┤                      ╱         ╲─────────┤
             ╱(Xmin,Ymin):╲       │                    ╱(Xmin,Ymin): ╲      │
             ╲  (X,Y-1)  ╱        │                    ╲  (X,Y+1)   ╱        │
               ╲       ╱ ─32      │                      ╲        ╱ ─38      │
                 ╲────╱           │                        ╲─────╱           │
                   │ >            │                           │ >            │
                   ▼              │                           ▼              │
            ┌──────────────┐      │                  ┌───────────────────┐   │
            │  Ymin=Y-1    │─33   │                  │ Xmin=X, Ymin=Y+1  │─39│
            └──────────────┘      │                  └───────────────────┘   │
                   │              │                           │              │
                   ◄──────────────┘                           ◄──────────────┘
                   │                                          │
                   ▼                                          ▼
                  ╱╲          =                              ╱╲          =
                 ╱  ╲ ────────────┐                         ╱  ╲ ────────────┐
                ╱X:15╲            │                        ╱X:-16╲           │
                ╲    ╱ ─34        │                        ╲    ╱ ─40        │
                 ╲  ╱             │                         ╲  ╱             │
                  ╲╱              │                          ╲╱              │
                   │ ≠            │                           │ ≠            │
                   ▼              │                           ▼              │
                 ╱────╲      ≤    │                        ╱─────╲      ≤    │
               ╱        ╲─────────┤                      ╱         ╲─────────┤
             ╱(Xmin,Ymin):╲       │                    ╱(Xmin,Ymin): ╲      │
             ╲  (X+1,Y)  ╱        │                    ╲  (X,Y-1)   ╱        │
               ╲       ╱ ─35      │                      ╲        ╱ ─41      │
                 ╲────╱           │                        ╲─────╱           │
                   │ >            │                           │ >            │
                   ▼              │                           ▼              │
         ┌──────────────────┐     │                  ┌───────────────────┐   │
         │ Xmin=X+1, Ymin=Y │─36  │                  │ Xmin=X , Ymin=Y-1 │─42│
         └──────────────────┘     │                  └───────────────────┘   │
                   │              │                           │              │
                   ◄──────────────┘                           ◄──────────────┘
                   │                                          │
                   ▼                                          ▼
                  (A)                                    ┌─────────┐
                                                         │   END   │
                                                         └─────────┘
```

# Fig. 9

VERIFY THE LOCAL MIN. VALUE

X: 15 — 43
Y: -4 — 44
(Xmin, Ymin):(X+1, Y-1) — 45
Xmin = X+1, Ymin = Y-1 — 46
Y: 3 — 47
(Xmin, Ymin):(X+1, Y+1) — 48
Xmin = X+1, Ymin = Y+1 — 49

A

X: -16 — 50
Y: 3 — 51
(Xmin, Ymin):(X-1, Y+1) — 52
Xmin = X-1, Ymin = Y+1 — 53
Y: -4 — 54
(Xmin, Ymin):(X-1, Y-1) — 55
Xmin = X-1, Ymin = Y-1 — 56
END